# EUROPÄISCHE PATENTSCHRIFT

(11) **EP 3 781 853 B1**
(45) Veröffentlichungstag und Bekanntmachung des Hinweises auf die Patenterteilung: **17.09.2025**
(21) Anmeldenummer: 19709023.6
(22) Anmeldetag: 04.03.2019
(51) Int. Cl.: F16L 13/14, F16L 33/207

(54) **PRESSFITTING FÜR EINE ROHRVERBINDUNG UND VERFAHREN ZU SEINER HERSTELLUNG**
PRESS FITTING FOR A PIPE CONNECTION, AND METHOD FOR PRODUCING SAME
RACCORD À SERTIR POUR UNE RACCORD TUBULAIRE ET SON PROCÉDÉ DE FABRICATION

(30) Priorität: 20.04.2018 DE 102018109555
(43) Veröffentlichungstag der Anmeldung: 24.02.2021
(73) Patentinhaber: Uponor Innovation AB, 73061 Virsbo (SE)
(72) Erfinder: MÜLLER, Stephan, 97437 Haßfurt (DE); DITTMAR, Rainer, 97422 Schweinfurt (DE); CLAUSSEN, Jörg, 48329 Havixbeck (DE); ALTMANN, Maik, 97475 Zeil am Main (DE)
(74) Vertreter: Fenner, Seraina
(86) Internationale Anmeldenummer: PCT/EP2019/055316
(87) Internationale Veröffentlichungsnummer: WO 2019/201500

(56) Entgegenhaltungen:
- EP-A1- 1 933 073
- DE-T2- 60 306 297
- US-A- 5 195 788
- US-B1- 9 523 451

## Beschreibung

Die Erfindung betrifft ein Pressfitting für eine Rohrverbindung aufweisend einen Fittingkörper zum Verbinden des Pressfittings mit einem Rohr und eine an dem Fittingkörper festgelegte Presshülse mit einem im Wesentlichen zylinderförmigen Pressbereich.

Derartige Pressfittings sind aus dem Stand der Technik vielfach bekannt. Sie ermöglichen die einfache und zeitsparende Herstellung von Rohrverbindungen für eine Vielzahl von Anwendungen mittels eines geeigneten Presswerkzeugs. Beispielsweise lassen sich auf diese Weise Gas- und Wasserleitungen unterschiedlicher Durchmesser herstellen.

EP 1 933 073 A1 offenbart einen Pressfitting für ein Rohr, insbesondere ein Kunststoffrohr oder ein Rohr aus einem Kunststoff-Metall-Verbundwerkstoff, ist mit einem Fittingkörper versehen, der einen Stützkörper aufweist, auf den ein anzuschließendes Rohr aufschiebbar ist. Ferner weist der Pressfitting eine Presshülse auf, die ein Halteende aufweist, an welchem die Presshülse an dem Fittingkörper gehalten ist. An ihrer Umfangsfläche weist die Presshülse einen sich an das Halteende anschließenden Verpressbereich auf, in welchem bei Verpressung der Presshülse auf diese ein Presswerkzeug einwirkt. Die Presshülse weist an ihrem Halteende zur Stirnseite der Presshülse hin offene Randaussparungen auf, die jeweils einen der Stirnseite der Presshülse gegenüberliegenden Begrenzungsrandabschnitt aufweisen. Ein Kunststoffring liegt außen an der Presshülse und ist gegen Bewegungen in axialer Richtung der Presshülse an dieser gesichert, wobei der Kunststoffring mindestens einen axial abstehenden Vorsprung aufweist, der sich bis in den Verpressbereich der Presshülse hinein erstreckt und der bei Einwirkung des Presswerkzeuges auf die Presshülse zerstörbar und/oder von dem Kunststoffring abtrennbar gesichert ist, und wobei der mindestens eine Vorsprung mindestens einen vom Kunststoffring abstehenden und mit diesem verbundenen Anbindungssteg und einen Umfangssteg aufweist, der mit dem Kunststoffring abgewandten Ende des mindestens einen Anbindungssteges verbunden ist und sich unter Bildung einer Aussparung zum Kunststoffring in Umfangsrichtung desselben erstreckt.

DE 60 306 297 T2 offenbart einen Anschlussstutzen mit mindestens einer Öffnung, mit der ein Ende eines anzuschließenden Rohrs in Eingriff gebracht werden kann, und der mindestens einen Umfangsbereich aufweist, in dem das Rohr nach einem Quetschvorgang fixiert werden kann, und der zumindest im Bereich des Umfangsbereichs von einer Muffe bedeckt ist, die aus Kunststoff hergestellt ist, dadurch gekennzeichnet, dass der Kunststoff wärmeschrumpfbar ist, und die Muffe dazu ausgelegt ist, beim Aufquetschvorgang zu brechen, wobei die Muffe mindestens einen Schwachbereich um den Umfangsbereich herum besitzt.

US 5,195,788 betrifft ein verbessertes Einsatzelement (engl.: "insert member") zum Befestigen eines Schlauches (engl.: "hose") auf einem Nippel (engl.: "nipple") mittels einer Klemme (engl.: "clamp") und insbesondere ein verbessertes Einsatzelement, das automatisch die richtige Positionierung der verschiedenen Komponenten und einen besseren Schutz des Schlauches gegen Beschädigungen sicherstellt, verbunden mit einer sehr guten Haltefähigkeit der Klemmenanordnung.

Der vorliegenden Erfindung liegt die Aufgabe zugrunde, derartige Pressfittings weiter zu verbessern. Insbesondere soll ein besonders schlanker, material- und raumsparender Aufbau eines derartigen Pressfittings beschrieben werden. Des Weiteren sollen Möglichkeiten angegeben werden, die eine Anzeige einer Verpressung eines derartigen Pressverbinders ermöglichen. Schließlich sollen Herstellungsverfahren zur Herstellung derartiger Pressfittings beschrieben werden.

Die Erfindung ist in den unabhängigen Ansprüchen angegeben. Weitere Ausgestaltungen und Aspekte dienen dem besseren Verständnis der Erfindung.

Gemäß einem ersten Aspekt der Erfindung wird ein Pressfitting für eine Rohrverbindung beschrieben, gemäß Anspruch 1. Der Pressfitting weist einen Fittingkörper zum Verbinden des Pressfittings mit einem Rohr und eine an dem Fittingkörper festgelegte Presshülse mit einem im Wesentlichen zylinderförmigen Pressbereich und wenigstens einem hervorstehenden Element auf. Dabei begrenzt das wenigstens eine Element den im Wesentlichen zylinderförmigen Pressbereich in axialer Richtung. Das Pressfitting weist des Weiteren eine schlauchförmige Banderole, beispielsweise aus einer Kunststofffolie, auf, die den im Wesentlichen zylinderförmigen Pressbereich der Presshülse umgibt, wobei die schlauchförmige Banderole gegenüber einer Oberfläche der Presshülse verdrehbar angeordnet ist, durch das wenigstens eine Element in dem zylinderförmigen Pressbereich gehalten und beim Verpressen der Presshülse mit einem Presswerkzeug zumindest teilweise zerstört wird.

Die Vorsehung einer schlauchförmigen Banderole, beispielsweise aus einer Kunststofffolie, ermöglicht eine vielseitige, einfache und besonders platzsparende Markierung eines Pressfittings. Zugleich kann eine derartige, gegenüber einer Oberfläche der Presshülse verdrehbar angeordnete Banderole von den Pressbacken eines Presswerkzeugs während eines Pressvorgangs mitgenommen und dabei zumindest teilweise zerstört werden, was als Anzeige einer erfolgreichen Verpressung des Pressfittings dienen kann.

Die Verdrehbarkeit der Banderole kann beispielsweise dadurch hergestellt werden, dass die schlauchförmige Banderole und/oder die Presshülse derart ausgestaltet und/oder aufeinander angeordnet sind, dass eine Haftreibung zwischen einer Innenseite der schlauchförmigen Banderole und der Oberfläche der Presshülse geringer ist als eine Haftreibung zwischen einer Außenseite der schlauchförmigen Banderole und einer Oberfläche einer Pressbacke eines Presswerkzeugs beim Verpressen. Dies kann beispielsweise dadurch erzielt werden, dass die Pressbacke eine relativ raue innere Oberfläche ausweist und die Presshülse eine glatte äußerer Oberfläche.

Beispielsweise kann die Oberfläche der Pressbacken aufgeraut und/oder die Oberfläche der Presshülse geglättet werden, beispielsweise durch Polieren, Trowalisieren oder Elektropolieren. Unter diesen Umständen könnte die Banderole an beiden Seiten eine gleichartige Oberfläche mit einer gleichen Oberflächenrauigkeit aufweisen.

In wenigstens einer Ausgestaltung weist die Außenseite der schlauchförmigen Banderole eine größere Oberflächenrauigkeit auf als die Innenseite der schlauchförmigen Banderole. Die Haftreibung beziehungsweise Oberflächenrauigkeit der Banderole kann beispielsweise durch Bedrucken deren Innenseite oder Außenseite beeinflusst werden, wobei die bedruckte Seite eine andere Oberflächenrauigkeit aufweist als die unbedruckte Seite. Alternativ oder zusätzlich ist es auch möglich, die Außenseite der Banderole, beispielsweise durch mechanische Verfahren oder die Einwirkung von Plasma oder Ionenstrahlen, aufzurauen.

In wenigstens einer Ausgestaltung ist die Innenseite der schlauchförmigen Banderole zusätzlich mit einem Gleitlack bedruckt, was zu einer reduzierten Haftreibung führt. Das Bedrucken insbesondere einer Innenseite der schlauchförmigen Banderole weist den Vorteil auf, dass die auf die Banderole gedruckten Informationen vor dem Verpressen des Pressfittings vor einer Beschädigung geschützt sind.

In wenigstens einer Ausgestaltung ist die schlauchförmige Banderole aus einer Kunststofffolie gefertigt. Kunststofffolien sind leicht, kostengünstig in der Herstellung, nicht wasserlöslich und deshalb für einen Einsatz auf einer Baustelle gut geeignet.

In wenigstens einer Ausgestaltung weist die Kunststofffolie der schlauchförmigen Banderole ein thermoplastisches Material auf, und die schlauchförmige Banderole ist auf den im Wesentlichen zylinderförmigen Pressbereich aufgeschrumpft. Eine derartige Ausgestaltung ermöglicht ein einfaches, gegebenenfalls nachträgliches Aufbringen der Banderole auf die Presshülse.

Als Material für die Kunststofffolie der schlauchförmigen Banderole eignen sich unter anderem verstrecktes (Englisch: "pre-stressed") beziehungsweise orientiertes Polystyrol (OPS), Polyethylenterephthalat (PET), Polylactide (PLA) und Polyvinylchlorid (PVC). Derartige Kunststofffolien sind bei einer Normaltemperatur relativ brüchig und/oder weisen einen niedrigen Dehnungskoeffizienten auf. Hierdurch kann sichergestellt werden, dass das Kunststoffmaterial der Banderole beim Zerpressen zuverlässig zerstört wird.

In unterschiedlichen Ausgestaltung ist die Kunststofffolie der schlauchförmigen Banderole als einlagige oder mehrlagige Kunststofffolie ausgestaltet. Eine einlagige Folie ist besonders kostengünstig und einfach in der Handhabung. Durch die Wahl unterschiedlicher Materialen beispielsweise für eine Außen- und Innenseite einer zweilagigen Kunststofffolie kann deren Rauigkeit beziehungsweise Haftreibung wie gewünscht beeinflusst werden. Außerdem ermöglicht eine mehrlagige Folie es, einen Aufdruck der Banderole beidseitig vor Beschädigungen zu schützen, indem ein Aufdruck zwischen zwei Folienschichten angeordnet werden kann.

In wenigstens einer Ausgestaltung weist die Kunststofffolie der schlauchförmigen Banderole eine Dicke zwischen 10 und 200 µm, bevorzugt zwischen 35 und 90 µm, beispielsweise von 40, 45 oder 50 µm, auf. Allgemein sollte die Folie so dünn wie materialtechnisch möglich gewählt werden.

In wenigstens einer Ausgestaltung ist die schlauchförmige Banderole aus einem Papierstreifen gefertigt. Papierstreifen sind leicht, kostengünstig und umweltfreundlich in der Herstellung und Entsorgung.

In wenigstens einer Ausgestaltung weist die schlauchförmige Banderole keine Sollbruchstelle auf und wird allein durch die beim Verpressen auftretenden Kräfte zumindest teilweise zerstört, insbesondere zerpresst. Dies hat den Vorteil, dass ein versehentliches Abreißen der Folie vor dem Verpressen praktisch ausgeschlossen ist.

In wenigstens einer alternativen Ausgestaltung weist die schlauchförmige Banderole wenigstens eine Perforationslinie, einen Einschnitt und/oder eine Ausnehmung auf. Durch die Vorsehung derartiger, als Sollbruchstelle dienende Bereiche kann eine besonders zuverlässige Zerstörung der Folie sichergestellt werden. Zugleich ermöglichen sie das Entweichen etwaiger Lufteinschlüsse zwischen der Folie und der Presshülse während einer Fertigung des Pressfittings. Zudem kann insbesondere eine sich axial oder helixförmig erstreckende Perforationslinie auch dazu dienen, die schlauchförmige Banderole bei Bedarf händisch von der Presshülse entfernen zu können, ohne das hierzu ein weiteres Werkzeug, wie beispielsweise ein Messer, erforderlich ist.

In wenigstens einer Ausgestaltung bedeckt die schlauchförmige Banderole im Wesentlichen den gesamten Pressbereich. Hierdurch werden Unebenheiten zwischen einer Oberfläche des Presswerkzeugs und der Oberfläche der durch die Banderole bedeckten Presshülse vermieden.

In wenigstens einer Ausgestaltung weist die Presshülse wenigstens ein erstes Sichtfenster auf und die wenigstens eine schlauchförmige Banderole weist ein zu dem ersten Sichtfenster korrespondierendes zweites Sichtfenster auf. Die beiden Sichtfenster sind derart angeordnet, dass erkennbar ist, ob ein Rohrende vollständig in das Pressfitting eingeführt wurde. Durch die genannten Merkmale wird eine manuelle Inspektion beim Einführen eines Rohres vor dem Verpressen des Pressfittings ermöglicht. Beispielsweise kann die schlauchförmige Banderole zumindest im Bereich des zweiten Sichtfensters transparent ausgestaltet werden.

In einer alternativen Ausgestaltung weist die Presshülse wenigstens ein Sichtfenster auf und die schlauchförmige Banderole bedeckt den Pressbereich der Presshülse zumindest in dem Teil nicht, in dem das Sichtfenster angeordnet ist. Somit ist auch in dieser Ausgestaltung ohne Entfernen der schlauchförmigen Banderole erkennbar, ob ein Rohrende vollständig in das Pressfitting eingeführt wurde.

In wenigstens einer Ausgestaltung weist die schlauchförmige Banderole wenigstens eine technische Angabe zum Typ, zur Montage oder zur Verwendung des Pressfittings auf. Derartige Angaben können beispielsweise den Durchmesser eines mit dem Fitting zu verbindenden Rohres betreffen, ein Anwendungsgebiet für die Rohrleitung, wie beispielsweise zur Verwendung in Gas-, Heiß- oder Kaltwasserinstallationen, oder können Hinweise bezüglich eines zum Verpressen benötigten Werkzeugs, Verpressdrucks oder sonstigen technischen Merkmalen enthalten. Auf diese Weise kann ein Monteur auf der Baustelle sicher das richtige Pressfitting auswählen, Verwechslungen zwischen zu verbindenden Leitungen und Fittings vermeiden und das Pressfitting in korrekter Weise verpressen.

In wenigstens einer Ausgestaltung weist die technische Angabe eine Verwendungsangabe und/oder Durchmesserangabe in Form einer Farbmarkierung auf. Alternativ oder zusätzlich weist die wenigstens eine technische Angabe eine maschinenlesbare Markierung auf, insbesondere einen Strichcode oder eine zweidimensionale Datenmatrix, wobei die maschinenlesbare Markierung einen Verweis auf in einem Datennetzwerk gespeicherte, weiterführende technische Informationen enthält. Derartige Angaben helfen insbesondere bei der Bereitstellung von sprachenunabhängigen beziehungsweise internationalisierbaren technischen Angaben.

In wenigstens einer Ausgestaltung weist das Pressfitting einen Haltering auf, wobei der Haltering an einem dem hervorstehenden Führungselement gegenüberliegenden Ende der Presshülse angeordnet ist und den Pressbereich in axialer Richtung begrenzt. Somit ist der Verpressbereich axial in beiden Richtungen eindeutig begrenzt, was insbesondere eine sichere Positionierung des Presswerkzeugs und somit eine sichere Verpressung der Presshülse gewährleistet.

In wenigstens einer Ausgestaltung ist das hervorstehende Führungselement an einem distalen, offenen Ende der Presshülse zur Aufnahme eines Rohres angeordnet, und der Haltering ist an einem proximalen Ende der Presshülse angeordnet. Die Presshülse wird mittels des Halterings an dem Fittingkörper des Pressfittings gehalten. Eine derartige Anordnung ermöglicht den einfachen und schnellen Zusammenbau des Pressfittings und eine genaue Positionierung eines Presswerkzeugs.

In wenigstens einer Ausgestaltung weist die Presshülse im Bereich des proximalen Endes eine umlaufende Wulst oder Rille auf, die mit dem Haltering verrastet.

In wenigstens einer Ausgestaltung weist der Haltering wenigstens ein Fenster auf, das derart angeordnet ist, dass erkennbar ist, ob ein Rohrende vollständig in das Pressfitting eingeführt wurde. Hierdurch kann ein zusätzliches oder alternatives Mittel zur Inspektion eines eingeführten Rohrendes geschaffen werden.

In wenigstens einer Ausgestaltung sind der Haltering und/oder das hervorstehende Element zur Führung einer Pressbacke eines Presswerkzeugs ausgestaltet. Dabei werden eine Führungsfunktion für das Presswerkzeug und eine Haltefunktion für die Banderole in einem Element vereinigt.

In wenigstens einer Ausgestaltung ist das hervorstehende Element als umlaufender Flansch ausgestaltet.

Gemäß einem zweiten Aspekt der vorliegenden Erfindung wird in Anspruch 12 ein Herstellungsverfahren für ein Pressfitting, und zwar für ein Pressfitting gemäß dem ersten Aspekt beschrieben. Das Herstellungsverfahren umfasst die folgenden Schritte:
- Aufbringen einer schlauchförmige Banderole auf einen im Wesentlichen zylinderförmigen Pressbereich einer Presshülse mit wenigstens einem hervorstehenden Element, wobei die schlauchförmige Banderole gegenüber einer Oberfläche der Presshülse verdrehbar angeordnet ist, durch das wenigstens eine hervorstehende Element in dem im Wesentlichen zylinderförmigen Pressbereich gehalten und beim Verpressen der Presshülse mit einem Presswerkzeug zumindest teilweise zerstört wird; und
- Festlegen der Presshülse an einem Fittingkörper.

In wenigstens einer Ausgestaltung wird der Schritt des Aufbringens der schlauchförmigen Banderole vor dem Schritt des Festlegens der Presshülse an dem Fittingkörper durchgeführt. Dies vereinfacht die Produktion vorkonfektionierter Hülsenbaugruppen, die an unterschiedlichen Fittingkörpern verwendet werden können.

In wenigstens einer alternativen Ausgestaltung wird der Schritt des Festlegens der Presshülse an dem Fittingkörper vor dem Schritt des Aufbringens der schlauchförmigen Banderole durchgeführt. Dies ermöglicht die Anbringung einer erfindungsgemäßen Verpresskennzeichnung an bereits fertiggestellten Pressfittings.

In wenigstens einer Ausgestaltung ist die schlauchförmige Banderole aus einer Kunststofffolie hergestellt und weist ein thermoplastisches Material auf. Das Verfahren umfasst zusätzlich ein Erhitzen der schlauchförmige Banderole, so dass die Kunststofffolie auf den im Wesentlichen zylinderförmigen Pressbereich aufgeschrumpft wird, wobei eine Temperatur und/oder eine Dauer des Erhitzens so gewählt wird, dass die schlauchförmige Banderole nach einem Abkühlen gegenüber der Oberfläche der Presshülse verdrehbar angeordnet ist. Mit den beschriebenen Maßnahmen lässt sich die Banderole einfach und maschinell auf die Presshülse aufbringen.

In wenigstens einer Ausgestaltung ist der Durchmesser der schlauchförmigen Banderole so gewählt, dass die schlauchförmige Banderole vor dem Erhitzen über das wenigstens eine hervorstehende Element auf den im Wesentlichen zylinderförmigen Pressbereich aufbringbar ist und die schlauchförmige Banderole nach dem Erhitzen durch das wenigstens eine hervorstehende Element in dem im Wesentlichen zylinderförmigen Pressbereich gehalten wird. Somit ist insbesondere ein nachträgliches Aufbringen der schlauchförmigen Banderole auf einer vorgeformten oder vormontierten Presshülse möglich.

Der Schritt des Festlegens der Presshülse an dem Fittingkörper umfasst in wenigstens einer Ausgestaltung das Aufbringen eines Halterings auf die Presshülse und das Verbinden des Fittingkörpers mit dem Haltering. Dabei kann der Haltering zugleich als eine Begrenzung des im Wesentlichen zylinderförmigen Pressbereichs dienen.

Beispielsweise kann der Haltering auf die Presshülse oder den Fittingkörper aufgespritzt werden und bevor der Fittingkörper beziehungsweise die Presshülse mit dem Haltering verrastet wird. Ein derartiges Herstellungsverfahren ermöglicht eine besonders einfache und zeitsparende Herstellung und Montage des Pressfittings.

Gemäß einer Ausgestaltung umfasst das Herstellungsverfahren zusätzlich den Schritt des Verbindens zweier gegenüberliegender Ränder eines Trägermaterials, insbesondere einer Kunststofffolie, sodass das Trägermaterial einen Schlauch aufweisend die schlauchförmige Banderole bildet. Beispielsweise werden die zwei gegenüberliegenden Ränder einer Kunststofffolie miteinander verklebt oder verschweißt.

Gemäß einer Ausgestaltung weist der Schlauch eine Vielzahl von schlauchförmigen Banderolen auf, und das Verfahren umfasst des Weiteren den Schritt des Vereinzelns der Vielzahl von schlauchförmigen Banderolen. Auf diese Weise wird aus einer einzelnen Bahn eines Trägermaterials auf effiziente Weise eine Vielzahl von schlauchförmigen Banderolen hergestellt.

In wenigstens einer Ausgestaltung umfasst das Herstellungsverfahren zusätzlich den Schritt des Bedruckens wenigstens einer Seite des Trägermaterials. Auf diese Weise kann aus einem plan bedruckbaren Trägermaterial eine schlauchförmige Banderole mit darauf aufgedruckten Informationen hergestellt werden. Hierfür eignet sich insbesondere ein Offset- oder Laserdruckverfahren.

In wenigstens einer Ausgestaltung wird ein Material der schlauchförmigen Banderole, insbesondere die Kunststofffolie, perforiert. Dieser Schritt kann gegebenenfalls bereits vor dem Verbinden der zwei gegenüberliegenden Ränder erfolgen.

Weitere vorteilhafte Aspekte und Ausgestaltungen der vorliegenden Erfindung sind in der nachfolgenden Beschreibung von Ausführungsbeispielen sowie den angehängten Patentansprüchen offenbart.

Die Erfindung wird nachfolgend anhand unterschiedlicher Ausführungsbeispiele unter Bezugnahme auf die angehängten Figuren im Detail beschrieben. Darin zeigen:
- Figuren 1A bis 1C: eine erste Ausführungsform eines erfindungsgemäßen Pressfittings,
- Figur 2: eine zweite Ausführungsform eines erfindungsgemäßen Pressfittings,
- Figur 3: eine dritte Ausführungsform eines erfindungsgemäßen Pressfittings,
- Figuren 4A und 4B: unterschiedliche Ausschnitte eines Querschnitt durch den Pressbereich eines erfindungsgemäßen Pressfittings,
- Figuren 5A bis 5C: perspektivische Ansichten eines erfindungsgemäßen Pressfittings während und nach einem Pressvorgangs,
- Figuren 6A und 6B: unterschiedliche Druckvorlagen für Banderolen erfindungsgemäßer Pressfittings,
- Figur 7: eine Schrumpfkurve einer geeigneten thermoplastischen Kunststofffolie zur Herstellung einer Banderole, und
- Figur 8: ein Ablaufdiagram eines Verfahrens zur Herstellung eines erfindungsgemäßen Pressfittings.

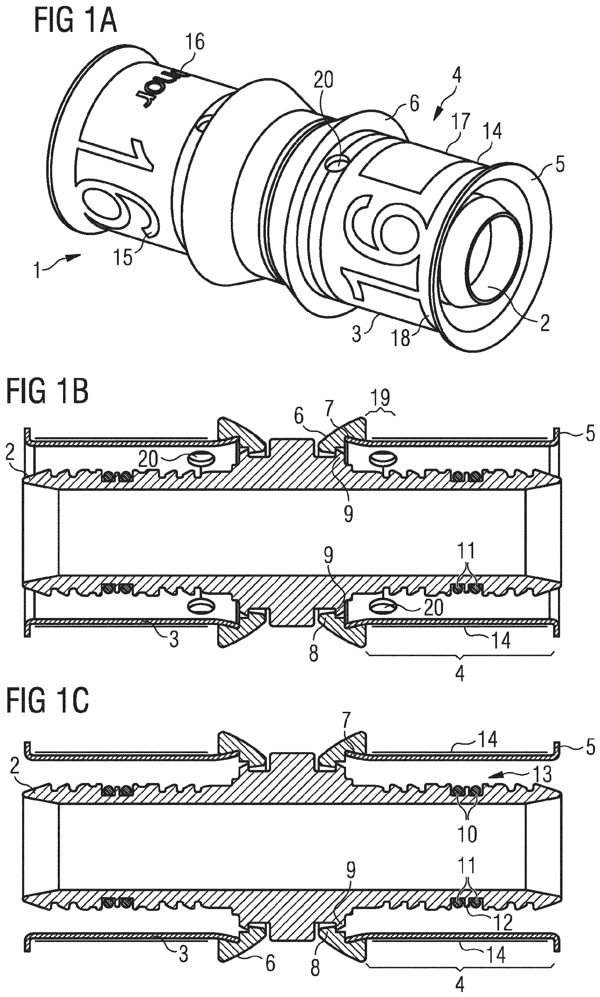

In den Figuren 1A bis 1C sind unterschiedliche Darstellungen eines Pressfittings 1 gemäß einer ersten Ausführungsform der Erfindung wiedergegeben. Figur 1A zeigt eine perspektivische Ansicht des zusammengebauten Pressfittings 1, Figur 1B zeigt eine Aufsicht durch das in der Mitte aufgeschnittene Pressfitting 1, und Figur 1C zeigt eine Schnittdarstellung entlang einer zentralen Schnittebene des Pressfittings 1.

Wie insbesondere in den Figuren 1B und 1C zu erkennen ist, ist das Pressfitting 1 besonders schlank und materialsparend ausgestaltet. Dies wird durch verschiedene Merkmale erreicht, die im Weiteren im Detail beschrieben sind.

In den Figuren 1A bis 1C ist zu erkennen, dass das Pressfitting 1 im Wesentlichen einen Fittingkörper 2 zum Verbinden des Pressfittings 1 mit einem in den Figuren 1A bis 1C nicht dargestellten Rohr, beispielsweise einem Metall, Kunststoff- oder Metall-Kunststoff-Verbundrohr, sowie eine an dem Fittingkörper 2 festgelegte Presshülse 3 mit einem im Wesentlichen zylinderförmigen Pressbereich 4 aufweist. Insbesondere bei Metall-Kunststoff-Verbundrohren ist es aus mechanischen Gründen wünschenswert, dass das Rohr über einen Teil des Fittingkörpers 2 geschoben wird. Dieser Teil des Fittingkörpers 2 dient beim Verpressen der Presshülse 3 als Stützhülse. Im Ausführungsbeispiel ist der Fittingkörper 2 rotationssymmetrisch bezüglich seiner Längsachse und spiegelsymmetrisch bezüglich einer dazu senkrechten Mittelebene mit zwei gegenüberliegenden Anschlüssen zum Herstellen einer geradlinigen Rohrverbindung ausgestaltet. Je nach Durchmesser des Pressfittings 1 und dem durchzuleitenden Fluid kann der Fittingkörper 2 aus einem Kunststoffmaterial, wie etwa Polyphenylensulfon (PPSU), oder einem bevorzugt trinkwassergeeigneten Metallmaterial, wie insbesondere einer verzinnter Kupferlegierung oder Edelstahl, bestehen.

Die Presshülse 3 besteht im Wesentlichen aus einem hohlen Metallblechstück, beispielsweise aus rostfreiem Stahl. Der zylinderförmige Pressbereich 4 der beschriebenen Ausgestaltung ist vor einer Verpressung glatt, das heißt er weist keine hervorstehenden Rippen oder eingeprägte Vertiefungen auf, und trägt so zur besonders schlanken Ausgestaltung und material- und ressourcensparenden Herstellung des Pressfittings 1 bei. Grundsätzlich ist auch die Vorsehung von hervorstehenden Rippen auf dem Pressbereich 4 möglich. Wegen der direkten Einwirkung des Presswerkzeugs auf einen Dichtungsbereich ist eine Konturierung der Presshülse 3 jedoch nicht erforderlich. Der Pressbereich 4 ist in axialer Richtung am distalen Ende des Pressfittings 1 durch einen nach außen gebogenen Flansch 5 der Presshülse 3 begrenzt. Am gegenüberliegenden, proximalen Ende wird der Pressbereich 4 durch einen Haltering 6 begrenzt.

Der Haltering 6 ist im beschriebenen Ausführungsbeispiel ein Kunststoffspritzgussteil. Der Haltering 6 dient zur Festlegung der Presshülse 3 an dem Fittingkörper 2. Hierzu weist die Presshülse 3 am proximalen Ende einen geringfügig aufgeweiteten Bereich 7 auf, der mit dem Haltering 6 verrastet ist. Der Haltering 6 ist des Weiteren mit dem Fittingkörper 2 über zwei gegenüberliegende Rastnasen 8 und 9 verrastet. Auf ein Schlitzen oder eine sonstige Bearbeitung der Presshülse 3 kann verzichtet werden. Sofern der Fittingkörper 2 und die Presshülse 3 aus Metallmaterialen hergestellt sind, dient der Haltering 6 zudem zur Herstellung einer galvanischen Trennung.

Zur Abdichtung einer ein Fluid leitenden Verbindung zwischen einem Rohr und dem Pressfitting 1 sind in dem Fittingkörper 2 zwei umlaufende Vertiefungen 10 eingearbeitet, die zur Aufnahme entsprechender Dichtringe 11 dienen. Ein Steg 12 zwischen den beiden benachbarten Vertiefungen 10 tritt gegenüber eine Oberfläche des benachbarten Verpressprofils 13 des Fittingkörpers 2 zurück. Diese Ausgestaltung des Verpressprofils 13 ermöglicht unter anderem den Einsatz von Dichtringen 11 mit reduziertem Durchmesser, bei Beibehaltung der erforderlichen Dichtfunktion. Dementsprechend kann auch die Wandstärke des Fittingkörpers 2 bei gleichem Rohrdurchmesser eines zu verpressenden Rohres geringer gewählt werden, sodass der Druckverlustbeiwert beim Durchströmen des Pressfittings 1 mit einem Fluid, auch bekannt als sogenannter Zeta-Wert, reduziert wird.

Ein weiteres Merkmal, das zur besonders schlanken Ausgestaltung des Pressfittings 1 beiträgt, ist eine auf der Presshülse 3 aufgebrachte, schlauchförmige Banderole 14. Die schlauchförmige Banderole 14 dient, wie nachfolgend ausgeführt, insbesondere als Verpresskennzeichnung für die Anschlüsse des Pressfittings 1. Auf diese Weise kann auf die Vorsehung eines zusätzlichen, als Verpresskennzeichnung dienenden Plastikringes im Pressbereich 4 verzichtet werden.

Im beschriebenen Ausführungsbeispiel besteht die Banderole 14 im Wesentlichen aus einem thermoplastischen Material, insbesondere aus vorgespanntem orientiertem Polystyrol (OPS), das durch Erhitzen auf den Pressbereich 4 der Presshülse 3 aufgeschrumpft wurde. Dabei wird die Banderole 14 solange erhitzt, bis die Banderole 14 gerade noch verdrehbar, ganz oder teilweise auf der Presshülse 3 anliegt, jedoch nicht mehr über den Flansch 5 von der Presshülse 3 abgezogen werden kann.

Alternativ kann die Banderole 14 auch aus Papier oder einem anderen schlauchförmigen, nicht schrumpffähigen Material gefertigt sein. Anstelle eines Aufschrumpfens kann eine solche Banderole durch Verkleben eines Materialstreifens, beispielsweise einer Folie oder eines Papierstreifens, zu einem Ring hergestellt werden. Unabhängig vom gewählten Material und Herstellungsprozess umgibt die Banderole 14 im fertigen Zustand die Presshülse 3 lose.

Eine derartige lose Verbindung zwischen der Banderole 14 und der Presshülse 3 sorgt dafür, dass die Banderole 14 in axialer Richtung auf dem Pressfitting 1 weitgehend festgelegt ist, in tangentialer Richtung aber noch bewegt werden kann, insbesondere bei der Verpressung der Presshülse 3. Die lose Verbindung unterstütz dabei die Zerstörung der Banderole 14 wie später im Detail ausgeführt. Im Ausführungsbeispiel kann die Banderole 14 ohne Verwendung eines Werkzeugs gegenüber der Presshülse 3 verdreht werden. Beispielsweise sitzt sie so lose auf der Presshülse 3, dass die Banderole 14 von einem tangential über ihre Oberfläche entlangstreifenden Finger mitgenommen wird.

Die Banderole 14 dient dabei nicht nur als Verpresskennzeichnung sondern trägt auch eine Mehrzahl von Angaben, die zur Kennzeichnung des Pressfittings 1 nützlich sind. Im in der Figur 1A dargestellten Ausführungsbeispiel ist beispielsweise zu erkennen, dass die Banderole 14 eine Angabe eines Durchmessers eines mit dem Pressfitting 1 zu verpressenden Rohres in Form einer Zahlenangabe 15, eine Herstellerangabe 16 in Form einer Marke, eine maschinenlesbare Markierung 17 in Form eines QR-Codes und eine Farbmarkierung 18 in Form eines Streifens aufweist.

Die Farbmarkierung 18 ermöglicht eine einfach zu erkennende Codierung des Rohrdurchmesser und/oder einer Verwendungsangabe für unterschiedliche Rohrleitungen, beispielsweise Rohrleitungen für Gas oder Wasser.

Über die maschinenlesbare Markierung 17 können mittels eines geeigneten Lesegeräts, beispielsweise eines Smartphones mit einer eingebauten Kamera oder eines elektronischen Verpresswerkzeugs mit einem eingebauten Strichcodeleser, weitere technische Informationen zu dem Pressfitting 1 ermittelt werden. Beispielsweise ist es möglich, einem Installateur auf einem Smartphone oder ähnlichem mobilen Gerät eine Installationsanleitung oder ein Datenblatt für das Pressfitting 1 anzuzeigen. Über derartige Markierungen 17 kann auch eine automatisierte Berichterstattung des Verpressens einer Vielzahl von Pressfittingen 1 auf einer Baustelle oder das Sammeln von Bonuspunkten bei der Verarbeitung entsprechend markierter Pressfittings 1 implementiert werden. Die maschinenlesbare Markierung 17 kann auch einen Link enthalten, der zu einer speziellen Anwendung beziehungsweise App führt, mittels derer weitere Informationen über oder Zertifikate für das Pressfitting 1 abgerufen oder Bonuspunkte gesammelt werden können.

Schließlich kann die Banderole 14 über entsprechende Aufdrucke auch auf besondere Ereignisse oder Aktionen eines Herstellers oder Verkäufers hinweisen.

Im in den Figuren 1A bis 1C dargestellten Ausführungsbeispiel bedeckt die schlauchförmige Banderole 14 den Verpressbereich 4 zum großen Teil, das heißt mehr als zur Hälfte, bevorzugt zu mehr als drei Viertel, noch bevorzugter fast vollständig. Sie reicht jedoch nicht vollständig an den Haltering 6 heran. Wie insbesondere in der Figur 1B dargestellt ist in einem Zwischenbereich 19 zwischen der Banderole 14 und dem Haltering 6 ein Sichtfenster 20 in Form einer Bohrung in die Presshülse 3 eingearbeitet. Durch das Sichtfenster 20 kann ein Monteur erkennen, ob ein Rohrende vollständig in das Pressfitting 1 eingeführt wurde, bevor er mit dem Verpressvorgang beginnt. Dabei behindert die Banderole 14 nicht die Sicht auf das Sichtfenster 20 und das darunterliegende Rohrende.

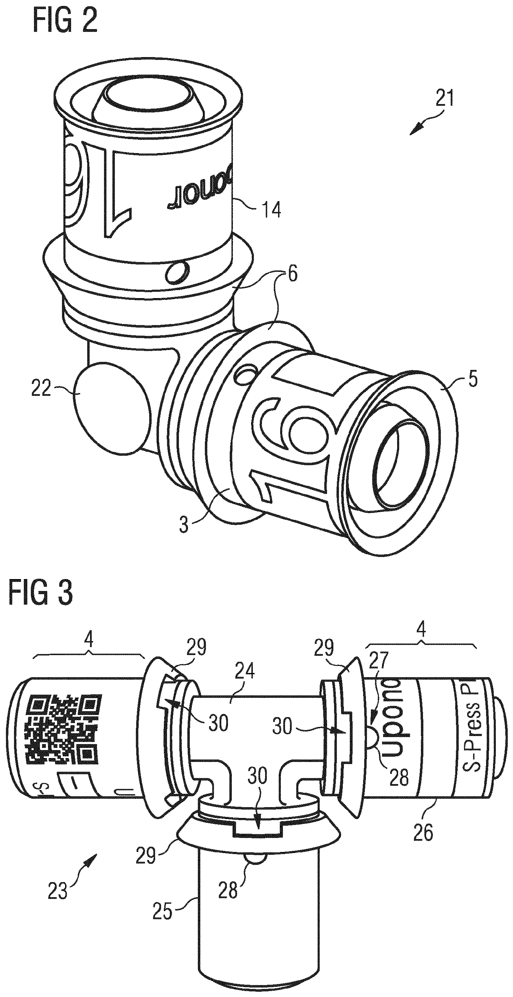

Figur 2 zeigt eine weitere Ausgestaltung eines Pressfittings 21 gemäß der vorliegenden Erfindung. Bei dem Pressfitting 21 handelt es sich um einen ellbogenförmigen Pressverbinder zum Verbinden von zwei Rohren. Dementsprechend ist der Fittingkörper 22 als Winkelstück ausgestaltet. Die beiden Anschlüsse des Pressfittings 21 entsprechen dabei im Wesentlichen den Anschlüssen des geradlinigen Pressfittings 1 gemäß den Figuren 1A bis 1C und werden daher hier nicht erneut beschrieben.

Figur 3 zeigt ein weiteres Pressfitting 23 in Form eines Anschlussstücks. An einem T-förmigen Fittingkörper 24 sind drei Anschlüsse für Rohrverbindungen vorgesehen. Diese entsprechen weitgehend den Anschlüssen des geradlinigen Pressfittings 1 gemäß den Figuren 1A bis 1C. Davon abweichend sind drei Presshülsen 25 des Pressfittings 23 an ihrem distalen Ende nur geringfügig aufgeweitet, weisen jedoch keinen Flansch auf, wie es in den Figuren 1A bis 1C und 2 dargestellt ist. Des Weiteren bedeckt eine Banderole 26 am linken und rechten Anschluss des Pressfittings 23 den gesamten Pressbereich 4. Auf den unteren Anschluss des Pressfittings 23 wurde keine Banderole aufgebracht, um die darunterliegende Presshülse 25 zu zeigen.

Um dennoch eine Inspektion eines in die Presshülse 25 eingeführten Rohrendes zu ermöglichen, ist eine Kunststofffolie der Banderole 26 an dem rechten Anschluss an transparent ausgeführt. Somit weist die Banderole an ihrem proximalen Ende ein transparentes Sichtfenster 27 auf, das die Sicht auf einen darunterliegenden, U-förmigen Ausschnitt 28 der Presshülse 25 freigibt.

Zusätzlich weist ein Haltering 29 im Bereich des U-förmigen Ausschnitts 28 auf einer dem Pressbereich 4 gegenüberliegenden Seite ein Fenster 30 auf. Das Fenster 30 ermöglicht ebenfalls eine visuelle Inspektion eines Rohrendes beim Einführen und Verpressen, von einem anderen Blickwinkel aus als das transparente Sichtfenster 27. Außerdem ermöglichen sie eine Verpresskontrolle auch bei Verwendung einer nichttransparenten Kunststofffolie für die Banderole 26, wie dies am linken Anschluss des Pressfittings 23 dargestellt ist.

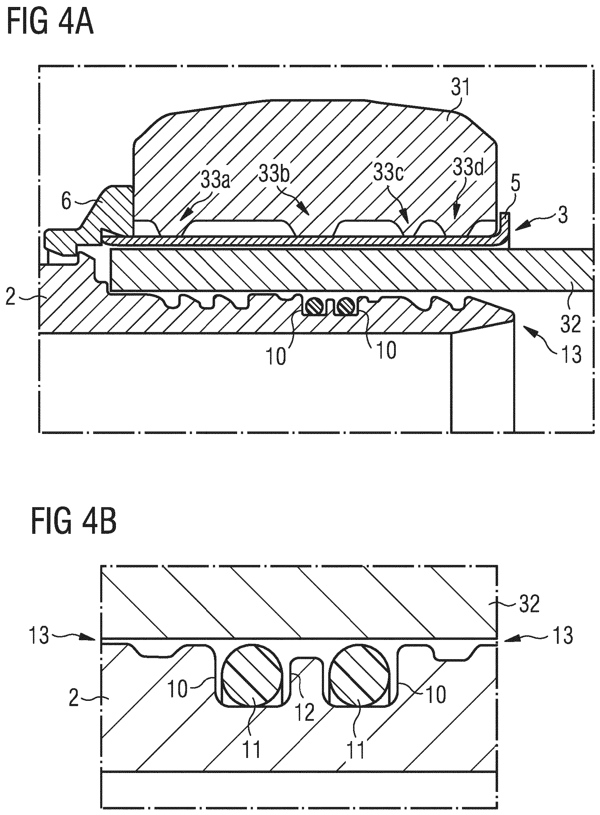

Die Figuren 4A und 4B zeigen schematisch die Ausgestaltung des Verpressprofils 13 des Fittingkörpers 2 sowie einer zugehörigen Pressbacke 31 eines geeigneten Verpresswerkzeugs. Dabei zeigt die Figur 3A einen ersten Ausschnitt umfassend die Pressbacke 31 des im Übrigen nicht dargestellten Presswerkzeugs und Figur 3B eine Vergrößerung des ersten Ausschnitts in einem Dichtbereich des Fittingkörpers 2. Im in den Figuren 4A und 4B dargestellten Zustand wurde ein Rohrende 32 vollständig in einen Anschluss des Pressfittings 1 eingeführt. Eine Verpressung durch das Presswerkzeug ist jedoch noch nicht erfolgt.

Wie insbesondere in der Figur 4A zu erkennen ist, bedeckt die Pressbacke 31 den gesamten Pressbereich 4 zwischen dem distalen Flansch 5 und dem proximalen Haltering 6. Somit ist eine einfache und genaue Positionierung der Pressbacke 31 auf der Presshülse 3 möglich, wobei die Pressbacke 31 beidseitig von dem Flansch 5 und dem Haltering 6 geführt wird. Die Pressbacke 31 weist mehrere hervorstehende Bereiche 33a bis 33d auf. Insbesondere ist ein zweiter hervorstehender Bereich 33b direkt gegenüber einer der zwei Vertiefungen 10 mit einem darin aufgenommenen Dichtring 11 positioniert. Dabei befindet sich der zweite hervorstehende Bereich 33b genau in der Mitte der Pressbacke 31, so dass er seine Position selbst bei einem Verdrehen des Presswerkzeugs beibehält. Die zweite Vertiefung 10 mit dem zweiten Dichtring 11 dient dabei als weiteres Sicherheitsmerkmal, falls die Pressbacke 31 trotz des Flansches 5 zu weit vorne an dem Pressfitting 1 angesetzt werden sollte. Die hohen Presskräfte in den hervorstehenden Bereichen 33a bis 33d der Pressbacke 31 unterstützen bevorzugt die Zerstörung der Banderole 14.

Wie insbesondere in der Figur 4B zu erkennen ist, ist der Steg 12, der die zwei korrespondierenden Vertiefungen 10 zur Aufnahme der Dichtringe 11 voneinander trennt, im Querschnitt niedriger als der rechts und links daneben liegende, benachbarte Bereich des Verpressprofils 13 des Grundkörpers 2. Die Dichtringe stehen über das obere Ende des Stegs 12 hinaus und enden im Wesentlichen auf Höhe des links und rechts daneben liegenden Verpressprofils 13. Auf diese Weise wird sichergestellt, dass sich das das Rohrende 32 in diesem Bereich gleichmäßig, insbesondere S-förmig, verbiegt und mit Sicherheit soweit auf den Fittingkörper 2 aufgepresst werden kann, dass eine dichtende Verbindung zwischen dem Rohrende 32, wenigstens einem der Dichtringe 11 und dem Fittingkörper 2 entsteht.

Gegenüber der Verwendung eines einzelnen Dichtrings mit einem größeren Querschnitt kann bei der gezeigten Anordnung wie oben beschrieben die Wandstärke des Fittingkörpers 2 bei gleichem Rohrdurchmesser eines zu verpressenden Rohrendes 32 geringer gewählt werden, sodass der Druckverlustbeiwert beim Durchströmen des Pressfittings 1 mit einem Fluid reduziert wird.

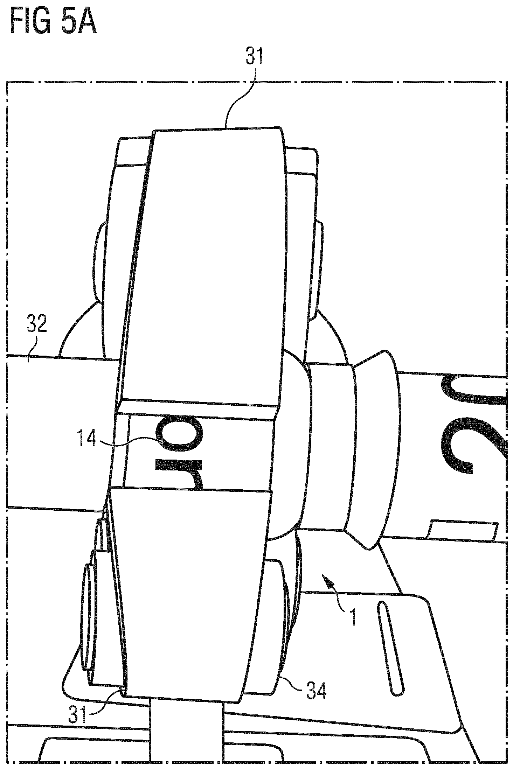

Figur 5A zeigt eine perspektivische Ansicht eines erfindungsgemäßen Pressfittings 1 während eines Verpressvorgangs mit einem Presswerkzeug 34. Während des Verpressens werden die Pressbacken 31 des Presswerkzeugs 24, gegebenenfalls hydraulisch, zusammengeführt, sodass diese ihren Innendurchmesser verringern. Dabei entsteht ein großer Anpressdruck zwischen den Pressbacken 31 und der die Presshülse 3 umgebenden Banderole 14. Durch die Verringerung des Durchmessers der Pressbacken 31 wird effektiv eine tangentiale Kraft auf die Banderole 14 ausgeübt, so dass ein Teil der Kunststofffolie in den Schließbereich der Pressbacken 31 transportiert wird. Insbesondere wird überschüssiges Material, das teilweise dem losen Sitz der Banderole 14 und teilweise der Verringerung des Durchmessers der Presshülse 3 beim Verpressen geschuldet ist, in die Schließebene des Presswerkzeugs 34 transportiert und bildet dort einen Zwickel. Der Zwickel wird von den sich schließenden Pressbacken 31 zerpresst beziehungsweise zerstört. Dies führt zu einer Beschädigung und in der Regel sogar zu einem Zerreißen der Banderole 14. Diese zumindest teilweise Zerstörung der Banderole 14 dient im beschriebenen Ausführungsbeispiel zugleich als Verpresskennzeichnung.

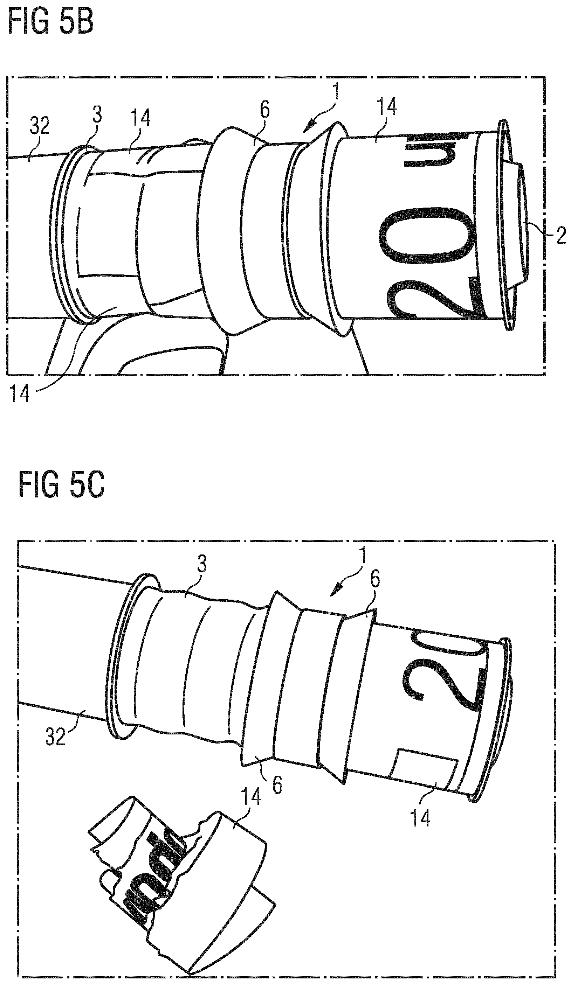

Der Zustand unmittelbar nach dem Abnehmen des Presswerkzeugs 34 nach dem Verpressen ist in der Figur 5B dargestellt. Hierin ist zu erkennen, dass die Banderole 14 die verpresste Presshülse 3 zwar noch überwiegend umgibt, jedoch in axialer Richtung einen Riss aufweist. Somit fällt die beschädigte Banderole 14 nach dem Verpressen von der Presshülse 3 ab oder kann zumindest leicht durch zwei Finger eines Monteurs von der Presshülse 3 entfernt werden, um eine erfolgreiche Verpressung des Pressfittings 1 anzuzeigen. Dieser Zustand ist in der Figur 5C dargestellt. Ebenfalls in der Figur 5C zu erkennen ist, dass die Presshülse 3 insbesondere in den hervorstehenden Bereichen der Pressbacke 31 eines Presswerkzeugs 34 besonders stark im Durchmesser reduziert wurde, um eine Dichtigkeit der Verbindung sicherzustellen.

Anders als bei vielen bekannten Pressfittings verbleibt der Haltering 6 auf dem verpressten Fitting 1. Da er sich außerhalb des Verpressbereichs 4 befindet, wird er bei dem Verpressvorgang auch nicht zerstört. Dies hat den Vorteil dass auf der Baustelle keine Kunststoffbruchstücke anfallen, die zu einer Blockierung des Presswerkzeugs führen könnten.

Obwohl dies in den Figuren 1A bis 5C nicht zu erkennen ist, kann das Zerreißen beziehungsweise manuelle Ablösen einer nur teilweise zerstörten Banderole 14 durch die Vorsehung geeigneter Sollbruchstellen erleichtert werden. Beispielsweise ist es möglich eine in axialer oder helixförmiger Richtung verlaufende Perforationslinie in die Banderole 14 einzubringen. Eine derartige Perforationslinie ist zur Zerstörung der Banderole 14 beim Verpressen nicht zwingend erforderlich. Sie hilft jedoch auch beim Aufschrumpfen der Banderole 14 auf die Presshülse 3, indem sie das kontrollierte Entweichen von darunter befindlichen Lufteinschlüssen ermöglicht. Anstelle von Perforationen können auch entsprechende Ausnehmungen oder Einschnitte in die Banderole 14 vorgesehen werden.

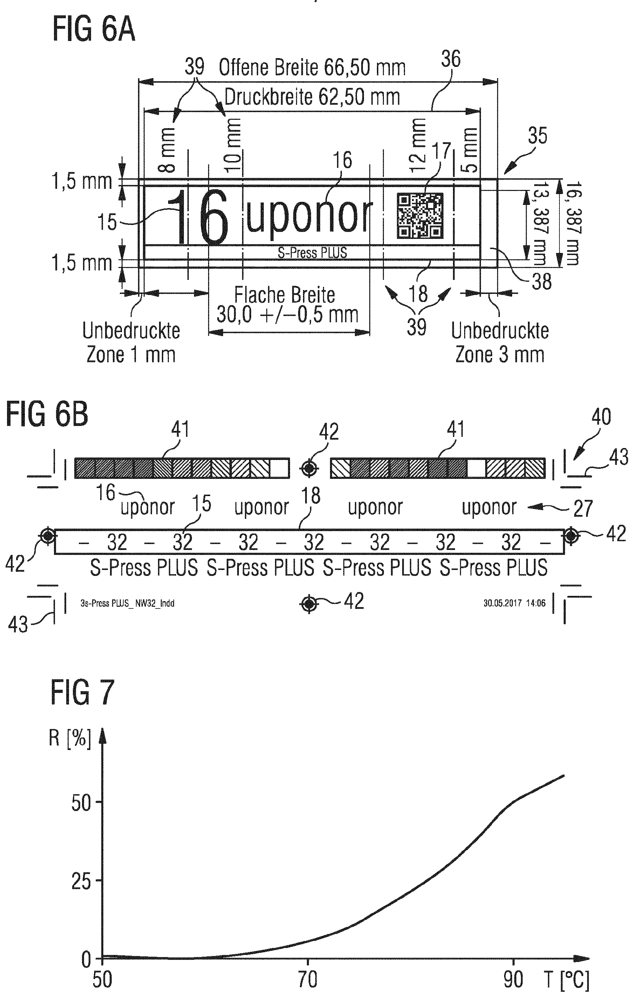

In den Figuren 6A und 6B sind unterschiedliche Druckvorlagen zum Herstellen einer als Verpresskennzeichnung dienende Banderole dargestellt.

Figur 6A zeigt eine erste Druckvorlage für eine plane Folie 35 zur Herstellung einer Markierung für ein Pressfitting mit einem Rohrdurchmesser von 16 mm. Ein Druckbereich 36 weist die bereits unter Bezugnahme auf die Figur 1 beschriebenen Angaben 15, 16, 17 und 18 auf. Ein oberer und unterer Randbereich 37 der Folie 35 wird im beschriebenen Ausführungsbeispiel nicht bedruckt und steht somit potentiell für ein transparentes Sichtfenster zur Verfügung. Eine seitliche unbedruckte Zone 38 dient zum Verkleben der Folie 35 zu der schlauchförmigen Banderole 14.

Wie in der Figur 6A dargestellt, weist die Folie 35 vier Perforationslinien 39 auf, die in Form von feinen Nadeleinstichen in die Folie 35 hergestellt werden. Nach Zusammenrollen der Folie 35 als schlauchförmige Banderole verlaufen diese in axialer Richtung und ermöglichen somit sowohl das Entweichen von Luft zwischen Folie 35 und der Presshülse 3 beim Aufschrumpfen und beim Verpressen mit dem Presswerkzeug, als auch eine leichtere Zerstörbarkeit der Banderole in tangentialer Richtung. Insbesondere verhindert das Vorsehen wenigstens einer Perforationslinie, dass bei einem Verpressvorgang eingeschlossene Luftblasen in die Schließebene der Pressbacke 31 gelangen und dort explosionsartig platzen. Das würde zu einer ungewünschten Geräuschentwicklung und möglicherweise zu umherfliegenden Folienpartikeln führen.

Figur 6B zeigt eine alternative Ausgestaltung einer Folie 40 für einen Rohrverbinder mit einem Durchmesser von 32 mm.

Abweichend zu der Folie 35 gemäß Figur 6A sind auf die Folie 40 keine maschinenlesbare Markierungen aufgedruckt. Ein oberer Randbereich der Folie 40 ist nicht bedruckt und bildet ein transparentes Sichtfenster 27. Darüber hinaus sind in der Druckvorlage gemäß Figur 6B verschiedene Farbmuster 41 und Positionsmarkierungen 42 zu erkennen, die einer genauen Positionierung des Aufdrucks auf der Folie 40 dienen. Schneidmarkierungen 43 geben an, an welcher Stelle die Folie 40 zerschnitten werden muss, um einzelne Banderolen 26 herzustellen.

Im beschriebenen Ausführungsbeispiel werden die Folien 35 und 40 einseitig in einem Offsetdruckverfahren bedruckt. Dabei führt das Bedrucken der Folien 35 beziehungsweise 40 mit einem entsprechenden Lack zu eine Reduzierung der Haftreibung der bedruckten Seite der Folie 35 beziehungsweise 40. Eine weitere Reduzierung der Haftreibung kann durch ein Bedrucken mit einem speziellen Gleitlack erzielt werden.

Die Folien 35 beziehungsweise 40 werden dann so durch Verbinden der seitlichen Randbereiche 37 zu schlauchförmigen Banderolen 14 beziehungsweise 26 zusammengerollt, dass sich die bedruckte Fläche auf der Innenseite der Banderole 14 beziehungsweise 26 befindet. Auf diese Weise ist sichergestellt, dass der Aufdruck der Folien 35 und 40 vor Beschädigungen beim Transport der Pressfittings 1, 21 beziehungsweise 23 geschützt ist.

Zugleich wird die Haftreibung zwischen der Presshülse 3 beziehungsweise 25 und der darüber liegenden Banderole gegenüber der Haftreibung zwischen der Außenseite der Banderole 14 beziehungsweise 26 und einer Pressbacke 31 eines Presswerkzeugs 34 reduziert. Dies führt dazu, dass die Banderole 14 beziehungsweise 26 beim Verpressen der Presshülse 3 beziehungsweise 25 von den Pressbacken 31 in tangentialer Richtung mitgeführt wird und auf der Oberfläche der Presshülse 3 beziehungsweise 25 gleitet, sodass eine sichere Zerstörung der Banderole 14 beziehungsweise 26 gewährleistet ist.

Die hierfür benötigte radiale Verdrehbarkeit der Banderole 14 beziehungsweise 26 kann alternativ oder zusätzlich auch durch eine geeignete Wahl einer Temperatur oder einer Dauer eines Aufschrumpfprozesses sichergestellt werden. Diesbezüglich zeigt Figur 7 schematisch eine Schrumpfkurve eines thermoplastischen Kunststoffmaterials. In Abhängigkeit einer herrschenden Temperatur T zwischen 50 und 95 °C ergibt sich bei einer vorgegebenen Schrumpfdauer, beispielsweise 10 Sekunden, ein deterministisch vorhersehbares Schrumpfverhältnis R. In Abhängigkeit des Innendurchmessers der schlauchförmigen Banderole 14 beziehungsweise 26 vor einem Schrumpfvorgang und dem äußeren Durchmesser der Presshülse 3 beziehungsweise 25 wird die Temperatur dabei so gewählt, dass die Banderole 14 beziehungsweise 26 sich nach dem Schrumpfprozess noch in radialer Richtung verdrehen lässt.

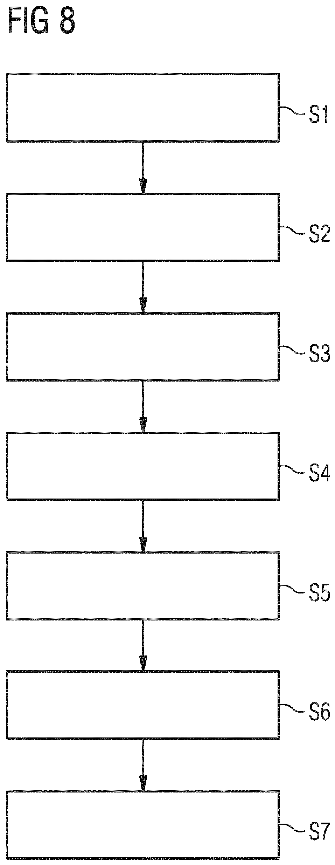

Figur 8 zeigt schematisch die Verfahrensschritte zur Herstellung eines Pressfittings gemäß einer Ausgestaltung der Erfindung, insbesondere des Pressfitting 1 gemäß den Figuren 1A bis 1C.

In einem Schritt S1 wird eine Kunststofffolie zunächst mit einer geeigneten Druckvorlage bedruckt. Beispielsweise kann eine zunächst plane OPS-Kunststofffolie mit einer der Vorlagen gemäß den Figuren 6A oder 6B bedruckt werden. Hierzu eignet sich beispielsweise ein Offset- oder Laserdruckverfahren.

Nachfolgend werden die Randbereiche 37 der bedruckten Folie 35 beziehungsweise 40 zusammengerollt, sodass sich ein Folienschlauch ergibt. Die beiden Randbereiche werden dann in einem Schritt S2 miteinander verbunden, beispielsweise verschweißt oder verklebt.

In einer bevorzugten Ausgestaltung werden mehrere gleichartige Markierungen übereinander auf eine längliche Folienbahn aufgedruckt. Auf diese Weise kann eine Vielzahl von Banderolen 14 beziehungsweise 26 gleichzeitig hergestellt werden. Diese werden in einem nachfolgenden, optionalen Schritt S3 durch Schneiden an vorbestimmten Trennebenen voneinander vereinzelt.

Die so hergestellten, einzelnen Banderolen 14 beziehungsweise 26 werden in einem Schritt S4 auf eine Presshülse 3 beziehungsweise 25 aufgebracht. Beispielsweise kann die Banderole 14 rückseitig über den aufgeweiteten Bereich 7 auf die Presshülse 3 gemäß den Figuren 1A bis 1C aufgebracht werden. Der Flansch 5 weist dabei nach unten und dient als Anschlag und Positionierhilfe für die Banderole 14. In einem optionalen Schritt kann zwischen die Presshülse 3 beziehungsweise 25 und die Banderole 14 beziehungsweise 26 ein Gleitmittel, wie beispielsweise Öl, Wachs oder ein Wasser- oder sonstiger Fluidfilm, eingebracht werden.

In einem Schritt S5 wird die Banderole 14 beziehungsweise 26 für eine vorbestimmte Zeit mit einer vorbestimmten Temperatur erhitzt, sodass sich die thermoplastische Kunststofffolie zusammenzieht. Beispielsweise kann die Zeit durch eine Dauer eines Durchlaufens eines Prozessofens gewählt oder bestimmt werden. Dabei sind Temperatur und/oder Dauer des Schritts des Erhitzens so gewählt, dass die Banderole 14 beziehungsweise 26 am Ende des Erhitzens lose auf der Presshülse 3 beziehungsweise 25 aufliegt. Bevorzugt wird die Banderole 14 beziehungsweise 26 schon in diesem Zustand in axialer Richtung sicher auf der Presshülse 3 beziehungsweise 25 gehalten, beispielsweise zwischen dem aufgeweiteten Bereich 7 und dem Flansch 5. Beim Durchlaufen des Prozessofens erwärmt sich die Presshülse 3 beziehungsweise 25 nur geringfügig. Wegen der verhältnismäßig großen Masse und thermischen Kapazität der Presshülse 3 beziehungsweise 25, endet der Aufschrumpfvorgang spätestens dann, wenn die Banderole 14 beziehungsweise 26 in Kontakt mit der kühlen Presshülse 3 beziehungsweise 25 tritt. Ein zusätzliches Abkühlen der Banderole 14 beziehungsweise 26 zum Beenden des Schrumpfvorgangs ist somit nicht erforderlich.

In einer optionalen Abwandlung wird die Presshülse 3 beziehungsweise 25 mit der Banderole 14 beziehungsweise 26 schlagartig abgekühlt, beispielsweise durch Verwendung eines Wasserbads. Ein derartiges Vorgehen verhindert ein nachträgliches, ungewolltes Schrumpfen des Banderolenmaterials. Dabei verbleibende Wasserreste zwischen der Presshülse 3 beziehungsweise 25 und der Banderole 14 beziehungsweise 26 dienen zugleich als Gleitmittel.

In einem sich darin anschließenden Schritt S6 wird ein Haltering 6 beziehungsweise 29 an der Presshülse 3 beziehungsweise 25 befestigt. Dies kann beispielsweise dadurch erfolgen, dass der Haltering 6 beziehungsweise 29 mit der Presshülse 3 beziehungsweise 25 verrastet wird oder der Haltering 6 beziehungsweise 29 direkt auf die Presshülse 3 beziehungsweise 25 als Spritzgussteil aufgespritzt wird. Spätestens hiermit ist die Banderole 14 beziehungsweise 6 axial in beide Richtungen gesichert.

In einem Schritt S7 wird die Presshülse 3 beziehungsweise 25 an dem Fittingkörper 2, 22 beziehungsweise 24 befestigt. Im Ausführungsbeispiel geschieht dies dadurch, dass die gesamte Hülsenbaugruppe auf den Fittingkörper 2, 22 beziehungsweise 24 aufgesteckt wird und dort verrastet. Selbstverständlich ist auch eine Umkehrung dieser Schritte, das heißt ein Aufspritzen oder Verrasten des Halterings 6 beziehungsweise 29 direkt auf dem Fittingkörper 2, 22 beziehungsweise 24 und ein Verrasten des Halterings 6 beziehungsweise 29 mit der Presshülse 3 beziehungsweise 25, möglich.

In einer alternativen Ausgestaltung des Verfahrens, wird die Banderole 14 beziehungsweise 26 erst nach dem Zusammenbau des übrigen Pressfittings 1, 21 oder 23 auf die Presshülse 3 beziehungsweise 25 aufgebracht. Hierbei wird der Innendurchmesser der noch nicht geschrumpften Banderole 14 beziehungsweise 26 so groß gewählt, dass er über ein hervorstehendes Element am distalen Ende der Presshülse 3 beziehungsweise 25, insbesondere den Flansch 5 der Presshülse 3, auf diese aufgeschoben werden kann. Im Schritt des Erhitzens schrumpft die Banderole 14 beziehungsweise 26 dann soweit zusammen, dass sie durch das hervorstehende Element in dem Pressbereich 4 gehalten wird. In diesem Fall werden die Schritte S6 und S7 bereits vor den Schritten S4 und S5 durchgeführt.

In einer weiteren alternativen Ausgestaltung des Verfahrens wird die Banderole 14 beziehungsweise 26 nicht auf die Presshülse 3 beziehungsweise 25 aufgeschrumpft. Stattdessen entspricht der Innendurchmesser der Banderole 14 beziehungsweise 26 vor dem Aufbringen der Banderole 14 beziehungsweise 26 auf die Presshülse 3 beziehungsweise 25 im Wesentlichen dem Außendurchmesser der Presshülse 3 beziehungsweise 25. In diesem Fall entfällt der Schritt S5 ersatzlos.

Anstelle der oben genannten Kunststofffolie kann in den Schrittes S1 bis S3 dann auch ein anderes nicht schrumpfbares Träger- beziehungsweise Banderolenmaterial, beispielsweise ein Papierbogen, zur Herstellung der Banderolen 14 beziehungsweise 26 verwendet werden.

Beispielsweise kann eine bereits geschlossene, schlauchförmige Banderole 14 beziehungsweise 26 vom proximalen Ende her auf die Presshülse 3 beziehungsweise 25 aufgeschoben werden, bevor die Presshülse 3 beziehungsweise 25 im Schritt S7 an dem Fittingkörper 2 befestigt wird. Alternativ kann ein Materialstreifen, beispielsweise ein Papierstreifen, um die Presshülse 3 beziehungsweise 25 geführt und erst dann überlappend zu einer schlauchförmigen Banderole 14 beziehungsweise 26 verklebt werden.

In sämtlichen beschriebenen Fällen ist die Banderole 14 beziehungsweise 26 im fertiggestellten Zustand des Pressfittings 1, 21 beziehungsweise 23 in axialer Richtung durch hervorstehende Teile des Pressfittings 1, 21 beziehungsweise 23, insbesondere den Flansch 5 oder einen sonstigen, hervorstehenden Bereich am distalen Ende und durch den Haltering 6 oder einen sonstigen, hervorstehenden Bereich am proximalen Ende, fixiert.

### Bezugszeichenliste

- 1: Pressfitting
- 2: Fittingkörper
- 3: Presshülse
- 4: Pressbereich
- 5: Flansch
- 6: Haltering
- 7: aufgeweiteter Bereich
- 8: Rastnase (des Halterings 6)
- 9: Rastnase (des Fittingkörpers 2)
- 10: Vertiefung
- 11: Dichtring
- 12: Steg
- 13: Verpressprofil
- 14: Banderole
- 15: Zahlenangabe
- 16: Herstellerangabe
- 17: maschinenlesbare Markierung
- 18: Farbmarkierung
- 19: Zwischenbereich
- 20: Sichtfenster
- 21: Pressfitting
- 22: Fittingkörper
- 23: Pressfitting
- 24: Fittingkörper
- 25: Presshülse
- 26: Banderole
- 27: transparentes Sichtfenster
- 28: u-förmige Ausnehmung
- 29: Haltering
- 30: Fenster
- 31: Pressbacke
- 32: Rohrende
- 33: hervorstehender Bereich
- 34: Presswerkzeug
- 35: Folie
- 36: Druckbereich
- 37: Randbereich
- 38: unbedruckte Zone
- 39: Perforationslinie
- 40: Folie
- 41: Farbmuster
- 42: Positionsmarkierung
- 43: Schneidmarkierung

- S1 bis S9: Verfahrensschritte

## Patentansprüche

1. Pressfitting (1, 21, 23) für eine Rohrverbindung, aufweisend:
- einen Fittingkörper (2, 22, 24) zum Verbinden des Pressfittings (1, 21, 23) mit einem Rohr;
- eine an dem Fittingkörper (2, 22, 24) festgelegte Presshülse (3, 25) mit einem im Wesentlichen zylinderförmigen Pressbereich (4) und wenigstens einem hervorstehenden Element, das den im Wesentlichen zylinderförmigen Pressbereich (4) in axialer Richtung begrenzt;
- eine schlauchförmige Banderole (14, 26), die den im Wesentlichen zylinderförmigen Pressbereich (4) der Presshülse (3, 25) umgibt, wobei die schlauchförmige Banderole (14, 26) durch das wenigstens eine hervorstehende Element in dem zylinderförmigen Pressbereich (4) gehalten wird sowie gegenüber einer Oberfläche der Presshülse (3, 25) verdrehbar angeordnet und derart eingerichtet ist, dass sie von den Pressbacken (31) eines Presswerkzeugs (34) beim Verpressen der Presshülse (3, 25) mitgenommen und dabei zumindest teilweise zerstört wird.

2. Pressfitting (1, 21, 23) nach Anspruch 1, wobei die Außenseite der schlauchförmigen Banderole (14, 26) eine größere Oberflächenrauigkeit aufweist als die Innenseite der schlauchförmigen Banderole (14, 26).

3. Pressfitting (1, 21, 23) nach Anspruch 2,
- wobei die Innenseite oder die Außenseite der schlauchförmigen Banderole (14, 26) bedruckt ist, und die bedruckte Seite eine andere Oberflächenrauigkeit aufweist als die unbedruckte Seite; und/oder
- wobei die Innenseite der schlauchförmigen Banderole (14, 26) mit einem Gleitlack bedruckt ist.

4. Pressfitting (1, 21, 23) nach einem der Ansprüche 1 bis 3, wobei die schlauchförmige Banderole (14, 26) aus einer Kunststofffolie gefertigt ist.

5. Pressfitting (1, 21, 23) nach Anspruch 4,
- wobei die Kunststofffolie der schlauchförmigen Banderole (14, 26) ein thermoplastisches Material aufweist und die schlauchförmige Banderole (14, 26) auf den im Wesentlichen zylinderförmigen Pressbereich (4) aufgeschrumpft ist; und/oder
- wobei die Kunststofffolie der schlauchförmigen Banderole (14, 26) eine Dicke zwischen 10 und 200 µm, bevorzugt zwischen 35 und 90 µm, insbesondere von 40, 45 oder 50 µm, aufweist; und/oder
- wobei die Kunststofffolie der schlauchförmigen Banderole (14, 26) wenigstens eines der folgenden Materialen aufweist: orientiertes Polystyrol (OPS), Polyethylenterephthalat (PET), Polylactide (PLA) und Polyvinylchlorid (PVC).

6. Pressfitting (1, 21, 23) nach einem der Ansprüche 1 bis 3, wobei die schlauchförmige Banderole (14, 26) aus einem Papierstreifen gefertigt ist.

7. Pressfitting (1, 21, 23) nach einem der Ansprüche 1 bis 6,
- wobei die schlauchförmige Banderole (14, 26) keine Sollbruchstelle aufweist; oder
- wobei die schlauchförmige Banderole (14, 26) wenigstens eine Perforationslinie (39), einen Einschnitt und/oder eine Ausnehmung aufweist.

8. Pressfitting (23) nach einem der Ansprüche 1 bis 7, wobei die schlauchförmige Banderole (26) im Wesentlichen den gesamten Pressbereich (4) bedeckt.

9. Pressfitting (23) nach einem der Ansprüche 1 bis 7,
- wobei die Presshülse (25) wenigstens ein erstes Sichtfenster aufweist und die wenigstens eine schlauchförmige Banderole (26) im Wesentlichen den gesamten Pressbereich (4) bedeckt und ein zu dem ersten Sichtfenster korrespondierendes zweites Sichtfenster (27) aufweist, die derart angeordnet sind, dass ohne Entfernen der schlauchförmigen Banderole (26) erkennbar ist, ob ein Rohrende (32) vollständig in das Pressfitting (23) eingeführt wurde; oder
- wobei die Presshülse (3) wenigstens ein Sichtfenster (20) aufweist und die schlauchförmige Banderole (14) den Pressbereich (4) der Presshülse (3) zumindest in dem Teil nicht bedeckt, in dem das Sichtfenster (20) angeordnet ist, so dass ohne Entfernen der schlauchförmigen Banderole (14) erkennbar ist, ob ein Rohrende (32) vollständig in das Pressfitting (1, 21) eingeführt wurde.

10. Pressfitting (1, 21, 23) nach einem der Ansprüche 1 bis 9, wobei die schlauchförmige Banderole (14, 26) wenigstens eine technische Angabe zum Typ, zur Montage oder zur Verwendung des Pressfittings (1, 21, 23) aufweist; insbesondere wobei die wenigstens eine technische Angabe wenigstens eine Verwendungsangabe und/oder Durchmesserangabe in Form einer Farbmarkierung (18) aufweist; und/oder wobei die wenigstens eine technische Angabe wenigstens eine maschinenlesbare Markierung (17), insbesondere einen Strichcode oder eine zweidimensionale Datenmatrix, aufweist, wobei die maschinenlesbare Markierung (17) einen Verweis auf in einem Datennetzwerk gespeicherte, weiterführende technische Informationen zu dem Pressfitting (1, 21, 23), insbesondere auf eine Installationsanleitung oder auf ein Datenblatt, enthält.

11. Pressfitting (1, 21, 23) nach einem der Ansprüche 1 bis 10, weiter aufweisend einen Haltering (6, 29), wobei der Haltering (6, 29) an einem dem hervorstehenden Element gegenüberliegenden Ende der Presshülse (3, 25) angeordnet ist und den Pressbereich (4) in axialer Richtung begrenzt, wobei das hervorstehende Element an einem distalen, offenen Ende der Presshülse (3, 25) zur Aufnahme eines Rohres und der Haltering (6, 29) an einem proximalen Ende der Presshülse (3, 25) angeordnet ist, und die Presshülse (3, 25) mittels des Halterings (6, 29) an dem Fittingkörper (2, 22, 24) des Pressfittings (1, 21, 23) gehalten wird.

12. Verfahren zur Herstellung eines Pressfittings (1, 21, 23) gemäß einem der Ansprüche 1 bis 11, umfassend:
- Aufbringen einer schlauchförmigen Banderole (14, 26) auf einen im Wesentlichen zylinderförmigen Pressbereich (4) einer Presshülse (3, 25) mit wenigstens einem hervorstehenden Element, wobei die schlauchförmige Banderole (14, 26) durch das wenigstens eine hervorstehende Element in dem im Wesentlichen zylinderförmigen Pressbereich (4) gehalten und gegenüber einer Oberfläche der Presshülse (3, 25) verdrehbar angeordnet ist, so dass sie von den Pressbacken (31) eines Presswerkzeugs (34) beim Verpressen der Presshülse (3, 25) mitgenommen und dabei zumindest teilweise zerstört wird; und
- Festlegen der Presshülse (3, 25) an einem Fittingkörper (2, 22, 24).

13. Verfahren nach Anspruch 12,
- wobei der Schritt des Aufbringens der schlauchförmigen Banderole (14, 26) vor dem Schritt des Festlegens der Presshülse (3, 25) an dem Fittingkörper (2, 22, 24) durchgeführt wird; oder
- wobei der Schritt des Festlegens der Presshülse (3, 25) an dem Fittingkörper (2, 22, 24) vor dem Schritt des Aufbringens der schlauchförmigen Banderole (14, 26) durchgeführt wird.

14. Verfahren nach einem der Ansprüche 12 bis 13, wobei die schlauchförmigen Banderole (14, 26) aus einer Kunststofffolie hergestellt ist, die ein thermoplastisches Material aufweist, und das Verfahren zusätzlich ein Erhitzen der schlauchförmige Banderole (14, 26) umfasst, so dass die Kunststofffolie auf den im Wesentlichen zylinderförmigen Pressbereich (4) aufgeschrumpft wird, wobei eine Temperatur und/oder eine Dauer des Erhitzens so gewählt wird, dass die schlauchförmige Banderole (14, 26) nach einem Abkühlen gegenüber der Oberfläche der Presshülse (3, 25) verdrehbar angeordnet ist.

15. Verfahren nach Anspruch 14, wobei der Durchmesser der schlauchförmigen Banderole (14, 26) so gewählt ist, dass die schlauchförmige Banderole (14, 26) vor dem Erhitzen über das wenigstens eine hervorstehende Element auf den im Wesentlichen zylinderförmigen Pressbereich (4) aufbringbar ist und die schlauchförmige Banderole (14, 26) nach dem Erhitzen durch das wenigstens eine hervorstehende Element in dem im Wesentlichen zylinderförmigen Pressbereich (4) gehalten wird.

16. Verfahren nach einem der Ansprüche 12 bis 14, wobei der Schritt des Festlegen der Presshülse (3, 25) an dem Fittinggrundkörper folgendes umfasst:
- Aufbringen eines Halterings (6, 29) auf die Presshülse (3, 25); und
- Verbinden des Fittingkörpers (2, 22, 24) mit dem Haltering (6, 29).

17. Verfahren nach Anspruch 16, zusätzlich aufweisend:
- Bedrucken des Trägermaterials, insbesondere mit einem Offset- oder Laserdruckverfahren; und/oder
- Perforieren eines Materials der schlauchförmigen Banderole, insbesondere einer Kunststofffolie.

## Claims

1. Press fitting (1, 21, 23) for a pipe connection, comprising:
- a fitting body (2, 22, 24) for connecting the press fitting (1, 21, 23) to a pipe;
- a press sleeve (3, 25) attached to the fitting body (2, 22, 24), the press sleeve having a substantially cylindrical pressing region (4) and at least one protruding element that defines the substantially cylindrical pressing region (4) in the axial direction;
- a tubular banderole (14, 26) which surrounds the substantially cylindrical pressing region (4) of the press sleeve (3, 25), the tubular banderole (14, 26) being held in the cylindrical pressing region (4) by the at least one protruding element, being arranged to be rotatable relative to a surface of the press sleeve (3, 25) and configured such that it is carried along by the pressing jaws (31) of a pressing tool (34) when the press sleeve (3, 25) is pressed and at least partially destroyed in the process.

2. Press fitting (1, 21, 23) according to Claim 1, wherein the outside of the tubular banderole (14, 26) has a greater surface roughness than the inside of the tubular banderole (14, 26).

3. Press fitting (1, 21, 23) according to Claim 2,
- wherein the inside or the outside of the tubular banderole (14, 26) is printed and the printed side has a different surface roughness to the unprinted side; and/or
- wherein the inside of the tubular banderole (14, 26) is printed with a lubricating coating.

4. Press fitting (1, 21, 23) according to any one of Claims 1 to 3, wherein the tubular banderole (14, 26) is made of a plastic film.

5. Press fitting (1, 21, 23) according to Claim 4,
- wherein the plastic film of the tubular banderole (14, 26) comprises a thermoplastic material and the tubular banderole (14, 26) is shrink-fitted onto the substantially cylindrical pressing region (4); and/or
- wherein the plastic film of the tubular banderole (14, 26) has a thickness of between 10 and 200 µm, preferably between 35 and 90 µm, particularly of 40, 45, or 50 µm; and/or
- wherein the plastic film of the tubular banderole (14, 26) comprises at least one of the following materials: oriented polystyrene (OPS), polyethylene terephthalate (PET), polylactide (PLA) and polyvinyl chloride (PVC).

6. Press fitting (1, 21, 23) according to any one of Claims 1 to 3, wherein the tubular banderole (14, 26) is made of a paper strip.

7. Press fitting (1, 21, 23) according to any one of Claims 1 to 6,
- wherein the tubular banderole (14, 26) does not have a predetermined breaking point; or
- wherein the tubular banderole (14, 26) has at least one perforation line (39), a slit and/or a cut-out.

8. Press fitting (23) according to any one of Claims 1 to 7, wherein the tubular banderole (26) substantially covers the entire pressing region (4).

9. Press fitting (23) according to any one of Claims 1 to 7,
- wherein the press sleeve (25) comprises at least a first viewing window and the at least one tubular banderole (26) substantially covers the entire pressing region (4) and a second viewing window (27) corresponding to the first viewing window, which are arranged in such a manner that it is possible to determine whether a pipe end
(32) has been fully inserted into the press fitting (23) without removing the tubular banderole (26); or
- wherein the press sleeve (3) comprises at least one viewing window (20) and the tubular banderole (14) does not cover the pressing region (4) of the press sleeve (3), at least in the area in which the
viewing window (20) is located, so that it is possible to see whether a pipe end (32) has been fully inserted into the press fitting (1, 21) without removing the tubular banderole (14).

10. Press fitting (1, 21, 23) according to any one of Claims 1 to 9, wherein
the tubular banderole (14, 26) bears at least one technical specification relating to the type, installation or use of the press fitting (1, 21, 23); in particular, wherein the at least one technical specification comprises at least one usage indication and/or diameter indication in the form of a colour marking(18); and/or wherein the at least one technical specification comprises at least one machine-readable marking (17), in particular a barcode or a two-dimensional data matrix, wherein the machine-readable marking (17) contains a reference to further technical information about the press fitting (1, 21, 23) stored in a data network, in particular an installation instruction or data sheet.

11. Press fitting (1, 21, 23) according to any one of Claims 1 to 10, further comprising a retaining ring (6, 29), wherein the retaining ring (6, 29) is arranged at an end of the press sleeve (3, 25) opposite the protruding element and delimits the pressing region (4) in this axial direction, wherein the protruding element is arranged at a distal open end of the press sleeve (3, 25) for receiving a pipe and the retaining ring (6, 29) is arranged at a proximal end of the press sleeve (3, 25), and the press sleeve (3, 25) is held on the fitting body (2, 22, 24) of the press fitting (1, 21, 23) by means of the retaining ring (6, 29).

12. Method for producing a press fitting (1, 21, 23) according to any one of Claims 1 to 11, comprising:
- applying a tubular banderole (14, 26) to a substantially cylindrical pressing region (4) of a press sleeve (3, 25) with at least one protruding element, wherein the tubular banderole (14, 26) is held in the substantially cylindrical pressing region (4) by the at least one protruding element and is arranged to be rotatable relative to a surface of the press sleeve (3, 25), so that it is carried along by the pressing jaws (31) of a pressing tool (34) when the press sleeve (3, 25) is pressed and at least partially destroyed in the process; and
- securing the press sleeve (3, 25) to a fitting body (2, 22, 24).

13. Method according to Claim 12,
- wherein the step of applying the tubular banderole (14, 26) is carried out before the step of fixing the press sleeve (3, 25) to the fitting body (2, 22, 24); or
- wherein the step of securing the press sleeve (3, 25) to the fitting body (2, 22, 24) is carried out before the step of applying the tubular banderole (14, 26).

14. Method according to any one of Claims 12 to 13, wherein the tubular banderole (14, 26) is made of a plastic film comprising a thermoplastic material and the method further involves heating the tubular banderole (14, 26) so that the plastic film shrinks onto the substantially cylindrical pressing region (4), wherein a temperature and/or duration of heating is/are selected in such a manner that, after cooling, the tubular banderole (14, 26) is arranged to be rotatable relative to the surface of the press sleeve (3, 25).

15. Method according to Claim 14, wherein the diameter of the tubular banderole (14, 26) is selected in such a manner that the tubular banderole (14, 26) can be applied to the substantially cylindrical pressing region (4) over the at least one protruding element before heating and that after heating, the tubular banderole (14, 26) is held in the substantially cylindrical pressing region (4) by the at least one protruding element.

16. Method according to any one of Claims 12 to 14, wherein the step of securing the press sleeve (3, 25) to the fitting body comprises:
- applying a retaining ring (6, 29) to the press sleeve (3, 25); and
- connecting the fitting body (2, 22, 24) to the retaining ring (6, 29).

17. Method according to Claim 16, further comprising:
- printing the carrier material, in particular using an offset or laser printing process; and/or
- perforating a material of the tubular banderole, in particular a plastic film.

## Revendications

1. Raccord emmanché (1, 21, 23) pour un raccord de tuyau, présentant :
- un corps (2, 22, 24) de raccord pour le raccordement du raccord emmanché (1, 21, 23) à un tuyau ;
- un manchon de serrage (3, 25) fixé au corps (2, 22, 24) de raccord présentant une zone de serrage (4) sensiblement cylindrique et au moins un élément en saillie, qui délimite la zone de serrage (4) sensiblement cylindrique dans la direction axiale ;
- une banderole (14, 26) en forme de tubulure, qui entoure la zone de serrage (4) sensiblement cylindrique du manchon de serrage (3, 25), la banderole (14, 26) en forme de tubulure étant maintenue par ledit au moins un élément en saillie dans la zone de serrage (4) cylindrique et étant agencée de manière à pouvoir tourner par rapport à une surface du manchon de serrage (3, 25) et étant conçue de telle sorte qu'elle est entrainée par les mâchoires de serrage (31) d'un outil de serrage (34) lors du serrage du manchon de serrage (3, 25) et ainsi au moins partiellement endommagée.

2. Raccord emmanché (1, 21, 23) selon la revendication 1, la face externe de la banderole (14, 26) en forme de tubulure présentant une rugosité de surface supérieure à celle de la face interne de la banderole (14, 26) en forme de tubulure.

3. Raccord emmanché (1, 21, 23) selon la revendication 2,
- la face interne ou la face externe de la banderole (14, 26) en forme de tubulure étant imprimée et la face imprimée présentant une autre rugosité que celle de la face non imprimée ; et/ou
- la face interne de la banderole (14, 26) en forme de tubulure étant imprimée par une laque lubrifiante.

4. Raccord emmanché (1, 21, 23) selon l'une des revendications 1 à 3, la banderole (14, 26) en forme de tubulure étant fabriquée à partir d'une feuille en matériau synthétique.

5. Raccord emmanché (1, 21, 23) selon la revendication 4,
- la feuille en matériau synthétique de la banderole (14, 26) en forme de tubulure présentant un matériau thermoplastique et la banderole (14, 26) en forme de tubulure étant rétractée sur la zone de serrage (4) sensiblement cylindrique ; et/ou
- la feuille en matériau synthétique de la banderole (14, 26) en forme de tubulure présentant une épaisseur entre 10 et 200 µm, de préférence entre 35 et 90 µm, en particulier de 40, 45 ou 50 µm ; et/ou
- la feuille en matériau synthétique de la banderole (14, 26) en forme de tubulure présentant au moins l'un des matériaux suivants : polystyrène orienté (OPS), poly (téréphtalate d'éthylène) (PET), polylactide (PLA) et poly(chlorure de vinyle) (PVC).

6. Raccord emmanché (1, 21, 23) selon l'une des revendications 1 à 3, la banderole (14, 26) en forme de tubulure étant fabriquée à partir d'une bandelette en papier.

7. Raccord emmanché (1, 21, 23) selon l'une des revendications 1 à 6,
- la banderole (14, 26) en forme de tubulure ne présentant pas de point destiné à la rupture ; ou
- la banderole (14, 26) en forme de tubulure présentant au moins une ligne de perforations (39), une entaille et/ou un évidement.

8. Raccord emmanché (23) selon l'une des revendications 1 à 7, la banderole (26) en forme de tubulure recouvrant sensiblement la totalité de la zone de serrage (4).

9. Raccord emmanché (23) selon l'une des revendications 1 à 7,
- le manchon de serrage (25) présentant au moins un premier regard et ladite au moins une banderole (26) en forme de tubulure recouvrant sensiblement la totalité de la zone de serrage (4) et présentant un deuxième regard (27) correspondant au premier regard, qui sont agencés de telle sorte qu'on peut détecter, sans enlever la banderole (26) en forme de tubulure, si une extrémité (32) de tuyau a été complètement introduite dans le raccord emmanché (23) ; ou
- le manchon de serrage (3) présentant au moins un regard (20) et la banderole (14) en forme de tubulure ne recouvrant pas la zone de serrage (4) du manchon de serrage (3), du moins pas dans la partie dans laquelle le regard (20) est agencé, de telle sorte qu'on peut détecter, sans enlever la banderole (14) en forme de tubulure, si une extrémité (32) de tuyau a été complètement introduite dans le raccord emmanché (1, 21).

10. Raccord emmanché (1, 21, 23) selon l'une des revendications 1 à 9, la banderole (14, 26) en forme de tube présentant au moins une indication technique concernant le type, le montage ou l'utilisation du raccord emmanché (1, 21, 23) ; en particulier ladite au moins une indication technique présentant au moins une indication d'utilisation et/ou une indication de diamètre sous forme d'un marquage coloré (18) ; et/ou ladite au moins une indication technique présentant au moins un marquage (17) lisible par machine, en particulier un code-barres ou une matrice de données bidimensionnelle, le marquage (17) lisible par machine contenant une référence à des informations techniques complémentaires, enregistrées dans un réseau de données, concernant le raccord emmanché (1, 21, 23), en particulier à une notice d'installation ou à une fiche technique.

11. Raccord emmanché (1, 21, 23) selon l'une des revendications 1 à 10, présentant en outre une bague de retenue (6, 29), la bague de retenue (6, 29) étant agencée sur une extrémité du manchon de serrage (3, 25) opposée à l'élément en saillie et délimitant la zone de serrage (4) dans la direction axiale, l'élément en saillie étant agencé sur une extrémité ouverte, distale, du manchon de serrage (3, 25) afin de recevoir un tuyau et la bague de retenue (6, 29) étant agencée sur une extrémité proximale du manchon de serrage (3, 25) et le manchon de serrage (3, 25) étant maintenu à l'aide de la bague de retenue (6, 29) sur le corps (2, 22, 24) de raccord du raccord emmanché (1, 21, 23).

12. Procédé pour la fabrication d'un raccord emmanché (1, 21, 23) selon l'une des revendications 1 à 11, comprenant :
- l'application d'une banderole (14, 26) en forme de tubulure sur une zone de serrage (4) sensiblement cylindrique d'un manchon de serrage (3, 25) présentant au moins un élément en saillie, la banderole (14, 26) en forme de tubulure étant maintenue par ledit au moins un élément en saillie dans la zone de serrage (4) sensiblement cylindrique et agencée de manière à pourvoir tourner par rapport à une surface du manchon de serrage (3, 25) de telle sorte qu'elle est entraînée par les mâchoires de serrage (31) d'un outil de serrage (34) lors du serrage du manchon de serrage (3, 25) et ainsi au moins partiellement endommagée ; et
- la fixation du manchon de serrage (3, 25) sur un corps (2, 22, 24) de raccord.

13. Procédé selon la revendication 12,
- l'étape d'application de la banderole (14, 26) en forme de tubulure étant réalisée avant l'étape de fixation du manchon de serrage (3, 25) sur le corps (2, 22, 24) de raccord ; ou
- l'étape de fixation du manchon de serrage (3, 25) sur le corps (2, 22, 24) de raccord étant réalisée avant l'étape d'application de la banderole (14, 26) en forme de tubulure.

14. Procédé selon l'une des revendications 12 à 13, la banderole (14, 26) en forme de tubulure étant fabriquée à partir d'une feuille en matériau synthétique, qui présente un matériau thermoplastique et le procédé comprenant en outre un chauffage de la banderole (14, 26) en forme de tubulure de telle sorte que la feuille en matériau synthétique est rétractée sur la zone de serrage (4) sensiblement cylindrique, une température et/ou une durée du chauffage étant choisie(s) de telle sorte que la banderole (14, 26) en forme de tubulure est agencée de manière à pouvoir tourner par rapport à la surface du manchon de serrage (3, 25) après un refroidissement.

15. Procédé selon la revendication 14, le diamètre de la banderole (14, 26) en forme de tubulure étant choisi de telle sorte que la banderole (14, 26) en forme de tubulure peut être appliquée avant le chauffage au-delà dudit au moins un élément en saillie sur la zone de serrage (4) sensiblement cylindrique et la banderole (14, 26) en forme de tubulure étant maintenue dans la zone de serrage (4) sensiblement cylindrique par ledit au moins un élément en saillie après le chauffage.

16. Procédé selon l'une des revendications 12 à 14, l'étape de fixation du manchon de serrage (3, 25) sur le corps de base de raccord comprenant :
- l'application d'une bague de retenue (6, 29) sur le manchon de serrage (3, 25) ; et
- le raccordement du corps (2, 22, 24) de raccord et de la bague de retenue (6, 29).

17. Procédé selon la revendication 16, présentant en outre :
- l'impression du matériau support, en particulier par un procédé d'impression offset ou au laser ; et/ou
- la perforation d'un matériau de la banderole en forme de tubulure, en particulier d'une feuille en matériau synthétique.
